# EUROPÄISCHE PATENTSCHRIFT

(11) **EP 1 225 995 B1**
(45) Veröffentlichungstag und Bekanntmachung des Hinweises auf die Patenterteilung: **21.05.2003**
(21) Anmeldenummer: 00972778.5
(22) Anmeldetag: 16.10.2000
(51) Int. Cl.: B22F 5/00, F16C 9/04, B23D 31/00

(54) **VERFAHREN UND VORRICHTUNG ZUM BEHANDELN VON KÖRPERN NACH DEM BRUCHTRENNEN**
METHOD AND DEVICE FOR TREATING BODIES AFTER SEPARATION BY BREAKING
PROCEDE ET DISPOSITIF DE TRAITEMENT DE CORPS APRES SEPARATION PAR CASSURE

(30) Priorität: 18.10.1999 DE 19950140
(43) Veröffentlichungstag der Anmeldung: 31.07.2002
(73) Patentinhaber: Alfing Kessler Sondermaschinen GmbH, 73433 Aalen (DE)
(72) Erfinder: HÜGLER, Eberhard, 73433 Aalen (DE)
(74) Vertreter: HOFFMANN - EITLE
(86) Internationale Anmeldenummer: EP0010177
(87) Internationale Veröffentlichungsnummer: WO01028716

(56) Entgegenhaltungen:
- WO-A-94/20765
- US-A- 4 702 403

## Beschreibung

Die vorliegende Erfindung betrifft ein Verfahren zum Behandeln von Körpern nach dem Bruchtrennen sowie eine Vorrichtung zur Durchführung des Verfahrens.

Beim Bruchtrennen von Körpern, wie Pleueln, Lagern, ringförmigen Gehäusen und dergleichen, wird das Material einem sogenannten Gewaltbruch ausgesetzt. Dies führt auch im Falle der Anordnung von Sollbruchkerben in der Bruchtrennebene nicht immer zu einem durchlaufenden einheitlichen Bruch. Vielmehr kommt es vor, dass beim Bruchvorgang Materialpartikel aus der Bruchfläche herausgerissen werden, die anfänglich noch an der Bruchfläche haften, sich jedoch bei einer Krafteinwirkung auf die Bruchflächen, wie sie beispielsweise bei Pleueln beim Anziehen der Pleuelschrauben oder beim späteren Betrieb auftritt, von der Bruchfläche lösen und ausfallen.

Derartige Ausfälle treten insbesondere im Randbereich der Bruchflächen auf und können - sofern es sich um Körper in Form von Lagern handelt - sogar zu Lagerschäden führen.

Die WO-A-94/20765 beschreibt ein Verfahren zur Herstellung eines Bauteils, das anschließend durch Bruchtrennen in zwei Teile geteilt wird. Beispielhaft ist die Behandlung eines Pleuels erwähnt. Das Verfahren bezieht sich auf verschiedene Wärmebehandlungen und mechanische Behandlungen der Teile. Es wird doch keine Vibrationsbehandlung der Teile angesprochen.

Aufgabe der vorliegenden Erfindung ist es daher, eine Verfahrensweise und eine Vorrichtung zu sehaffen, mit der ein unkontrolliertes Ausfallen von losen oder noch teilweise anhaftenden Materialpartikeln verhindert wird.

Diese Aufgabe wird erfindungsgemäß durch ein Verfahren gemäß Anspruch 1 sowie durch eine Vorrichtung gemäß Anspruch 14 gelöst. Vorteilhalfte Ausfährungsformen des Verfahrens bzw. der Vorrichtung sind in den abhängigen Ansprüchen definiert.

Der Erfindung liegt der Gedanke zugrunde, lösbare anhaftende Materialpartikel durch eine Vibrationsbehandlung aus der Bruchfläche herauszulösen und im Anschluss daran aus deren Bereich herauszufördern.

In Abhängigkeit vom Material des Pleuels kann die Vibrationsbehandlung in verschiedenen Frequenzbereichen erfolgen. Versuche haben ergeben, dass sich ein Frequenzbereich bis 20 Hz, in besonderen Fällen bis 50 Hz, besonders für die Vibrationsbehandlung eignet.

Grundsätzlich kann der gesamte Körper der Vibrationsbehandlung ausgesetzt werden. Zweckmäßig ist es jedoch, bei der Vibrationsbehandlung einen Teil des Körpers zu halten und den anderen Teil in Vibration zu versetzen.

Zum Herausfördern der abgelösten Materialpartikel eignen sich verschiedene Verfahrensweisen. Besonders gute Ergebnisse werden mit einer Beaufschlagung durch Blasluft erzielt, insbesondere dann, wenn diese pulsierend auf die Bruchtrennflächen aufgebracht wird.

Die Anregung für die Vibrationsbehandlung kann den jeweiligen Erfordernissen entsprechend unterschiedlich erzeugt werden. So ist sowohl eine pneumatische oder hydraulische als auch eine elektrische und mechanische Anregung möglich.

Gute Ergebnisse werden erzielt, wenn die der Vibrationsbehandlung unterworfenen Teile des Körpers eingespannt werden und lediglich in Anregungsrichtung in Grenzen verschiebbar gelagert sind.

Erfindungsgemäß ist, dass sich die beiden Teile des Körpers bei der Vibrationsbehandlung im Bereich der Bruchflächen leicht berühren.

Grundsätzlich kann die Vibrationsbehandlung mit oder ohne die Anordnung von zusätzlichen Elementen, wie beispielsweise bei Pleueln der Pleuelschrauben erfolgen. Sofern die Pleuelschrauben in einem vorangegangenen Arbeitsgang bereits eingeschraubt sind, sind diese vor der Vibrationsbehandlung einige Umdrehungen zu lösen und nach der Vibrationsbehandlung wieder anzuziehen.

Aufgabe der vorliegenden Erfindung ist es ferner, eine für die Durchführung des Verfahrens geeignete Vorrichtung zur Verfügung zu stellen.

Erfindungsgemäß umfasst eine derartige Vorrichtung eine Haltevorrichtung für die Körper sowie eine Vibrationseinrichtung, die auf die auf der Haltevorrichtung fixierten Körper einwirkt.

Die Haltevorrichtung kann dabei in der verschiedensten Weise ausgebildet sein. Vorteilhaft ist es jedoch, wenn ein Teil des Körpers, wie beispielsweise bei einem Pleuel, die Stange in der Haltevorrichtung fest eingespannt ist und lediglich der andere Teil, d.h. die Pleuel die Kappe durch die Vibrationseinrichtung relativ zur Stange bewegt wird, so dass sich die Bruchtrennflächen Leicht berühren können.

Zur Beaufschlagung mit Blasluft ist es vorteilhaft, eine mit Düsen ausgestattete Blaseinrichtung vorzusehen. Die Düsen können dabei in verschiedenster Weise ausgestaltet sein. Wesentlich ist lediglich, dass sie die abgetrennten Materialpartikel nicht nur herausfördern, sondern auch zu deren Ablösen von der Bruchfläche beitragen.

Im folgenden ist zur weiteren Erläuterung und besseren Verständnis der Erfindung ein Ausführungsbeispiel einer Vorrichtung zur Durchführung des erfindungsgemäßen Verfahrens unter Bezugnahme auf die beigefügte schematische Zeichnung kurz erläutert und beschrieben.

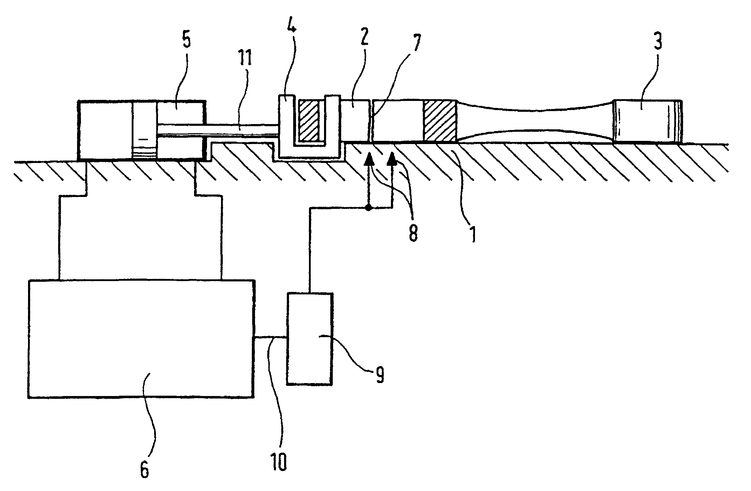

In der einzigen Figur ist eine erfindungsgemäße Vorrichtung zum Bruchtrennen von Pleueln stark schematisiert und in Seitenansicht dargestellt.

Die Vorrichtung umfasst eine Haltevorrichtung 1, auf der der aus Kappe 2 und Stange 3 bestehende Pleuel aufliegt.

Im vorliegenden Ausführungsbeispiel ist die Stange 3 über nicht dargestellte Mittel auf der Haltevorrichtung 1 fixiert. Diese Mittel können beispielsweise einen Dorn im Bereich des kleinen Pleuelauges, Anschläge oder dergleichen Haltevorrichtungen umfassen, die die Stange in der Ebene der Auflagefläche der Haltevorrichtung 1 gegen ein Verschieben fixieren.

Auf der Haltevorrichtug 1 ist ferner ein Zylinder 5 befestigt, der mit seinem Kolben über eine Kolbenstange 11 mit einem Mitnehmer 4 verbunden ist.

Der Mitnehmer 4 ist im wesentlichen U-förmig ausgebildet und umfasst die Kappe 2 auf der der Stange 3 gegenüberliegenden Seite des Pleuels.

Der Zylinder 5 ist über Leitungen mit einer Steuerungseinheit 6 verbunden, die zusammen mit dem Zylinder 5 eine Vibrationseinrichtung bildet.

Die Vorrichtung ist ferner mit einer Blaseinrichtung 9 ausgestattet, die über Leitungen mit Düsen 8 verbunden ist, welche derart angeordnet sind, dass sie die Bruchtrennflächen 7 zwischen der Kappe 2 und der Stange 3 mit Blasluft beaufschlagen können.

Im vorliegenden Ausführungsbeispiel ist die Steuerungseinheit 6 mit der Blaseinrichtung 9 über eine Steuerleitung 10 verbunden.

Sollen nun lose oder noch leicht anhaftende Partikel von den Bruchtrennflächen entfernt werden, wird die Steuerungseinheit 6 aktiviert, wodurch der Zylinder 5 in eine Hin- und Herbewegung versetzt wird. Die jeweilige Frequenz dieser Hin- und Herbewegung kann den jeweiligen Verhältnissen entsprechend durch die Steuerungseinheit 6 eingestellt werden. Die Hin- und Herbewegung des Kolbens des Zylinders 5 wird über die Stange 11 auf den Mitnehmer übertragen, der die Kappe 2 des Pleuels ebenfalls in eine Hin- und Herbewegung versetzt. Der Hub dieser Hin- und Herbewegung ist dabei derart eingestellt, dass die Kappe mit ihren Bruchtrennflächen die Bruchtrennflächen der Stange leicht berührt. Auf diese Weise werden lose oder leicht anhaftende Partikel von der Bruchtrennfläche abgelöst und durch die über die Düsen 8 austretende Blasluft abtransportiert.

Um eine kontrollierte Vibrationsbehandlung zu erreichen, ist es vorteilhaft, die Kappe 2 ebenfalls wie die Stange 3 auf der Haltevorrichtung zu fixieren. Diese Mittel sind in der Figur nicht dargestellt. Die Fixierung erfolgt in der Weise, dass die Kappe auf der Haltevorrichtung 1 lediglich in Wirkrichtung des Mitnehmers 4 in Grenzen verschiebbar, in allen anderen Richtungen jedoch weitgehend festgelegt ist.

## Patentansprüche

1. Verfahren zum Behandeln von Körpern nach dem. Bruchtrennen, **dadurch gekennzeichnet, dass** die Teile des bruchgetrennten Körpers einer Vibrationsbehandlung ausgesetzt werden, wobei sich die Bruchtrennflächen bei der Vibrationsbehandlung berühren.

2. Verfahren nach Anspruch 1, **dadurch gekennzeichnet, dass** die Vibrationsbehandlung in einem Frequenzbereich bis 10 Hz erfolgt.

3. Verfahren nach Anspruch 1, **dadurch gekennzeichnet, dass** die Vibrationsbehandlung in einem Frequenzbereich bis 20 Hz erfolgt.

4. Verfahren nach Anspruch 1, **dadurch gekennzeichnet, dass** die Vibrationsbehandlung in einem Frequenzbereich bis 50 Hz erfolgt.

5. Verfahren nach einem der Ansprüche 1 bis 4, **dadurch gekennzeichnet, dass** der eine Teil gehalten und der andere Teil in Vibration versetzt wird.

6. Verfahren nach einem oder mehreren der Ansprüche 1 bis 5, **dadurch gekennzeichnet, dass** die Bruchtrennflächen während der Vibrationsbehandlung mit Blasluft beaufschlagt werden.

7. Verfahren nach Anspruch 6, **dadurch gekennzeichnet, dass** die Blasluft pulsiert.

8. Verfahren nach einem oder mehreren der vorhergehenden Ansprüche, **dadurch gekennzeichnet, dass** die Anregung für die Vibrationsbehandlung pneumatisch ist.

9. Verfahren nach einem oder mehreren der vorhergehenden Ansprüche, **dadurch gekennzeichnet, dass** die Anregung für die Vibrationsbehandlung elektrisch ist.

10. Verfahren nach einem oder mehreren der vorhergehenden Ansprüche, **dadurch gekennzeichnet, dass** die Anregung für die Vibrationsbehandlung hydraulisch ist.

11. Verfahren nach einem oder mehreren der vorhergehenden Ansprüche, **dadurch gekennzeichnet, dass** die Anregung für die Vibrationsbehandlung mechanisch ist.

12. Verfahren nach einem oder mehreren der vorhergehenden Ansprüche, **dadurch gekennzeichnet, dass** die in Vibration versetzten Teile des Körpers in Anregungsrichtung in Grenzen verschiebbar eingespannt sind.

13. Verfahren zum Bruchtrennen von Pleueln nach einem oder mehreren der vorhergehenden Ansprüche 1 bis 12, bei dem vor oder nach dem Bruchtrennen von Kappe und Stange Pleuelschrauben eingeschraubt werden, **dadurch gekennzeichnet, dass** die Pleuelschrauben vor der Vibrationsbehandlung gelöst und nach der Vibrationsbehandlung angezogen werden.

14. Vorrichtung zur Durchführung des Verfahrens nach einem oder mehreren der vorhergehenden Ansprüche, **gekennzeichnet durch** eine Haltevorrichtung (1) für die Teile nach einem Bruchtrennen eines Körpers sowie eine Vibrationseinrichtung (5, 6), die auf eines der auf der Haltevorrichtung fixierten Teile des Körpers einwirkt, wobei eine Einrichtung zum Einspannen der Teile vorgesehen ist, sodass sich die Bruchtrennflächen leicht berühren können.

15. Vorrichtung nach Anspruch 14, **dadurch gekennzeichnet, dass** eine Blaseinrichtung (8, 9) vorgesehen ist, deren Düsen (8) zur Beaufschlagung der Bruchtrennflächen (7) des Körpers eingerichtet sind.

## Claims

1. Method for treating bodies after separation by breaking, **characterised in that** the parts of the body separated by breaking are exposed to vibrational treatment, wherein the surfaces separated by breaking touch one another in the vibrational treatment.

2. Method according to Claim 1, **characterised in that** the vibrational treatment takes place in a frequency range of up to 10 Hz.

3. Method according to Claim 1, **characterised in that** the vibrational treatment takes place in a frequency range of up to 20 Hz.

4. Method according to Claim 1, **characterised in that** the vibrational treatment takes place in a frequency range of up to 50 Hz.

5. Method according to one of Claims 1 to 4, **characterised in that** one part is held and the other part is set in vibration.

6. Method according to one or more of Claims 1 to 5, **characterised in that** the surfaces separated by breaking are acted upon during the vibrational treatment by blown air.

7. Method according to Claim 6, **characterised in that** the blown air pulsates.

8. Method according to one or more of the preceding claims, **characterised in that** the activation for the vibrational treatment is pneumatic.

9. Method according to one or more of the preceding claims, **characterised in that** the activation for the vibrational treatment is electric.

10. Method according to one or more of the preceding claims, **characterised in that** the activation for the vibrational treatment is hydraulic.

11. Method according to one or more of the preceding claims, **characterised in that** the activation for the vibrational treatment is mechanical.

12. Method according to one or more of the preceding claims, **characterised in that** the parts of the body set in vibration are mounted displaceably within limits in the activation direction.

13. Method for separating connecting rods by breaking according to one or more of the preceding Claims 1 to 12, in which before or after separation by breaking of the big end and rod connecting rod bolts are screwed in, **characterised in that** the connecting rod screws are loosened prior to the vibrational treatment and tightened after the vibrational treatment.

14. Device for carrying out the method according to one or more of the preceding claims, **characterised by** a holding device (1) for the parts after separation by breaking of a body and a vibration device (5, 6) which acts on one of the parts of the body fixed on the holding device, wherein a device for mounting the parts is provided so that the surfaces separated by breaking can easily touch one another.

15. Device according to Claim 14, **characterised in that** a blowing device (8, 9) is provided whose nozzles (8) are set up to act upon the surfaces (7) of the body separated by breaking.

## Revendications

1. Procédé de traitement de corps après séparation par cassure, **caractérisé en ce que** les parties du corps s'étant séparés par cassure sont exposées à un traitement par vibrations, les surfaces de séparation par cassure entrant en contact lors du traitement par vibrations.

2. Procédé selon la revendication 1, **caractérisé en ce que** le traitement par vibrations se fait dans une plage de fréquences allant jusqu'à 10 Hz.

3. Procédé selon la revendication 1, **caractérisé en ce que** le traitement par vibrations se fait dans une plage de fréquences allant jusqu'à 20 Hz.

4. Procédé selon la revendication 1, **caractérisé en ce que** le traitement par vibrations se fait dans une plage de fréquences allant jusqu'à 50 Hz.

5. Procédé selon l'une des revendications 1 à 4, **caractérisé en ce qu'**une première partie est maintenue stationnaire et l'autre partie est mise en vibration.

6. Procédé selon l'une ou plusieurs des revendications 1 à 5, **caractérisé en ce que** les surfaces de séparation par cassure sont exposées à de l'air de soufflage pendant le traitement par vibrations.

7. Procédé selon la revendication 6, **caractérisé en ce que** l'air de soufflage est un air pulsé.

8. Procédé selon l'une ou plusieurs des revendications précédentes, **caractérisé en ce que** l'excitation utilisée pour le traitement par vibrations est de nature pneumatique.

9. Procédé selon l'une ou plusieurs des revendications précédentes, **caractérisé en ce que** l'excitation utilisée pour le traitement par vibrations est de nature électrique.

10. Procédé selon l'une ou plusieurs des revendications précédentes, **caractérisé en ce que** l'excitation utilisée pour le traitement par vibrations est de nature hydraulique.

11. Procédé selon l'une ou plusieurs des revendications précédentes, **caractérisé en ce que** l'excitation utilisée pour le traitement par vibrations est de nature mécanique.

12. Procédé selon l'une ou plusieurs des revendications précédentes, **caractérisé en ce que** les parties du corps mises en vibration sont enserrées de façon à être déplaçables dans certaines limites, dans la direction d'excitation.

13. Procédé de séparation par rupture de bielle selon l'une ou plusieurs des revendications 11 à 12, dans lequel avant ou après la séparation par rupture du capuchon et de la tige des vis de bielles sont vissées, **caractérisé en ce que** les vis de bielles sont desserrées avant le traitement par vibrations et serrées après le traitement par vibrations.

14. Dispositif de mise en oeuvre du procédé selon l'une ou plusieurs des revendications précédentes, **caractérisé par** un dispositif de maintien pour les parties après une séparation par rupture d'un corps, ainsi qu'un dispositif de mise en vibration (5, 6), agissant sur l'une des parties du corps ayant été fixées sur le dispositif de maintien, un dispositif d'enserrement des parties étant prévu, de sorte que les surfaces de séparation par rupture puissent être aisément mises en contact.

15. Dispositif selon la revendication 14, **caractérisé en ce qu'**un dispositif de soufflage (8, 9) est prévu, dont les buses (8) sont équipées pour agir sur les surfaces de séparation par rupture (7) du corps.
